# EUROPEAN PATENT SPECIFICATION

(11) **EP 2 544 263 B1**
(45) Date of publication and mention of the grant of the patent: **23.04.2014**
(21) Application number: 12175133.3
(22) Date of filing: 05.07.2012
(51) Int. Cl.: H01M 2/20, H01M 2/26, H01M 2/10, H01M 10/04

(54) **Battery pack**
Batteriepack
Bloc-batteries

(30) Priority: 06.07.2011 US 201161504936 P; 21.03.2012 US 201213426362
(43) Date of publication of application: 09.01.2013
(73) Proprietor: Samsung SDI Co., Ltd., Yongin-si, Gyeonggi-do (KR)
(72) Inventor: PARK, Sanghun, Yongin-si, Gyeonggi-do (KR); MOON, Daeyon, Yongin-si, Gyeonggi-do (KR)
(74) Representative: Barr, Angela Louise

(56) References cited:
- EP-A1- 1 737 057
- EP-A1- 2 284 930
- EP-A2- 2 136 451
- WO-A1-2007/032273
- WO-A2-2006/053995
- DE-A1- 19 513 774
- US-A1- 2004 009 334

## Description

### FIELD OF THE INVENTION

An aspect of the present invention relates to a battery pack.

### DESCRIPTION OF THE RELATED ART

In general, secondary batteries can be repeatedly charged and discharged, and are widely used in various fields, including mobile phones, notebook computers, Tablet PCs, cameras, camcorders, hybrid electric vehicles, electric vehicles, electric scooters, and so on. High power batteries that use a plurality of battery cells connected to each other in a battery pack are used as power sources for applications requiring high power. The plurality of battery cells are generally electrically connected to each other by a connection member such as wires or a nickel plate.

### SUMMARY OF THE INVENTION

One or more embodiments of the present invention seek to provide a battery pack, in which battery cells can be easily combined together while enabling a reduction in the manufacturing cost.

According to a first aspect of the invention there is provided a battery pack comprising: at least one first battery cell electrically connected to a first flexible board; at least one second battery cell electrically connected to a second flexible board, the second flexible board being electrically connected to the first flexible board; and a circuit module electrically connected to the first flexible board and the second flexible board, and including a connection portion for electrically connecting the first and second flexible boards to an external device. The first flexible board is provided with a protruding surface portion protruding towards the second flexible board and a connection portion is provided on the protruding surface portion for electrical connecting, in the direction of stacking, to a corresponding connection portion of the second flexible board.

In one or more embodiments the at least one first battery cell is arranged in a first layer; the at least one second battery cell is arranged in a second layer stacked over the first layer; and the second flexible board is stacked over the first flexible circuit board.

For example, the first flexible board includes a ridge formed on one surface, and a welding terminal portion formed in the ridge, and the second flexible board includes a welding terminal portion located in correspondence with the welding terminal portion of the first flexible board, thereby enabling the welding terminal portions of the first flexible board and the second flexible board to be connected.

In an embodiment, the height of the protruding surface portion corresponds to the thickness of the first battery cell.

In an embodiment, the first flexible board is provided with at least one positive temperature coefficient element for protecting the at least one battery cell; and/or the second flexible board is provided with at least one positive temperature coefficient element for protecting the at least second battery cell. In an embodiment, at least one positive temperature coefficient (PTC) element may be formed on each top surface of the first flexible board and the second flexible board.

In an embodiment, a positive temperature coefficient element is provided for a respective battery cell in a one to one correspondence.

In an embodiment, a third board is provided to electrically connect the second flexible board to the circuit module.

In an embodiment, the third board is arranged over the second flexible board.

In an embodiment, the third board comprises a bending portion to compensate for a level difference between the circuit module and the second flexible board.

In an embodiment, the battery pack comprises a plurality of first battery cells electrically connected to one another by the first flexible board and a plurality of second battery cells electrically connected to one another by the second flexible board.

In an embodiment, a metallic cover plate is provided for enclosing the at least one first battery cell, the at least one second battery cell, the first flexible board, the second flexible board, the third flexible board and the circuit module, the metallic cover plate being provided with an aperture through which the connection portion of the circuit module extends.

In an embodiment, the third board is flexible. In an embodiment, the at least one first battery cell includes electrodes electrically connected to the first flexible board by a weld connection and being absent of a bend and the at least one second battery cell includes electrodes electrically connected to the second flexible board by a weld connection and being absent of a bend.

A related aspect of the invention provides a battery pack including first battery cells, a first flexible board connected to electrode tabs of the first battery cells, second battery cells stacked over the first battery cells, a second flexible board connected to electrode tabs of the second battery cells and connected in the direction of stacking to the first flexible board, a third flexible board having one end connected to the second flexible board, and a protection circuit module connected to the other end of the third flexible board.

In the battery pack according to an embodiment of the present invention, electrode tabs of the first battery cell are connected to the first flexible board and electrode tabs of the second battery cells are connected to the second flexible board, and second welding terminal portions formed on the ridge of the first flexible board are welded to welding terminal portions of the second flexible board, thereby facilitating connection of the first and second battery cells to each other when the first and second battery cells are stacked in a plurality of layers.

In addition, since PTC elements are formed on the first flexible board and the second flexible board, the PTC elements may be formed in the vicinity of the battery cells and may be stably combined with the battery cells.

Further, since it is not necessary to bend electrode tabs when the battery cells are connected to each other, the PTC elements can be prevented from being separated from the battery cells.

### BRIEF DESCRIPTION OF THE DRAWINGS

FIG. 1 is an assembled perspective view of a battery pack according to an embodiment of the present invention;
FIG. 2 is an exploded perspective view of the battery pack shown in FIG. 1;
FIG. 3 is an exploded perspective view of the battery pack shown in FIG. 1, from which a case is removed;
FIG. 4 is an enlarged perspective view illustrating a first battery cell and a first flexible board shown in FIG. 3;
FIG. 5 is an enlarged perspective view illustrating a second battery cell and a second flexible board shown in FIG. 3; and
FIG. 6 is an enlarged perspective view illustrating a third flexible board in the battery pack shown in FIG. 1.

### DETAILED DESCRIPTION

An embodiment will now be described more fully hereinafter with reference to the accompanying drawings. It will be appreciated however, that the invention may be embodied in different forms and should not be construed as limited to the embodiments set forth herein. Rather, the embodiment is provided so that this disclosure will be thorough and complete, and will fully convey the scope of the invention to those skilled in the art.

Hereinafter, a configuration of a battery pack according to the embodiment will be described.

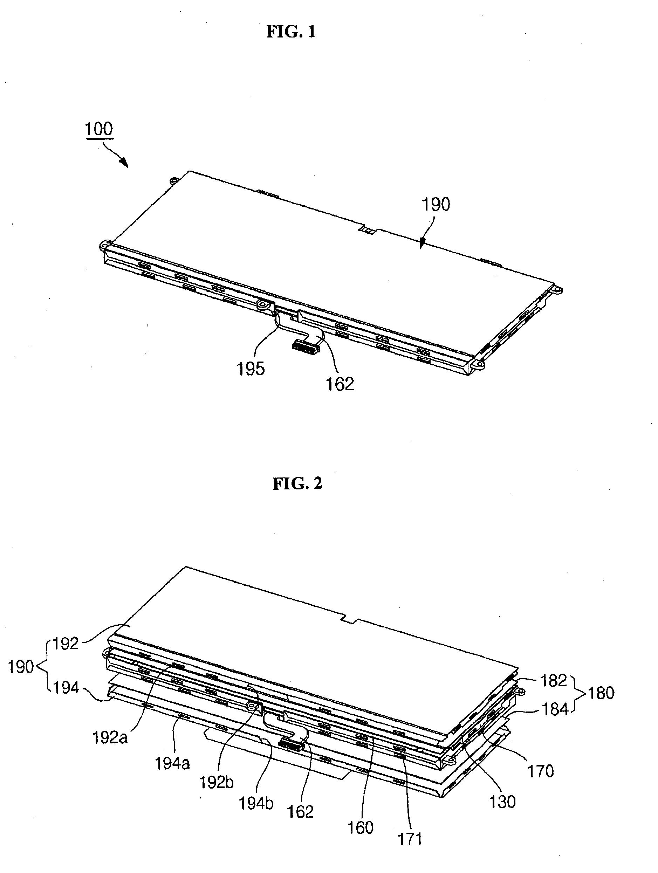

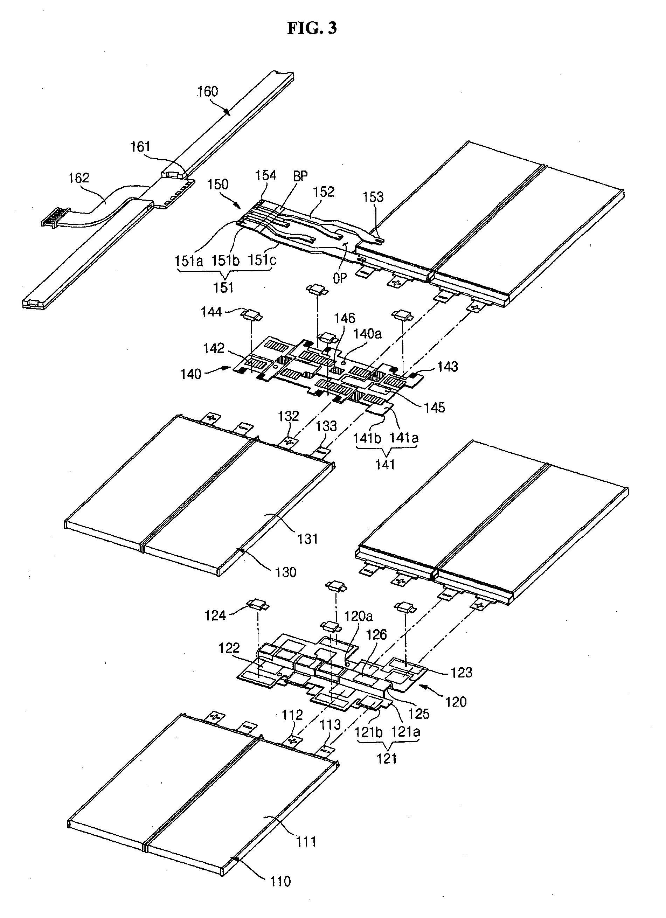

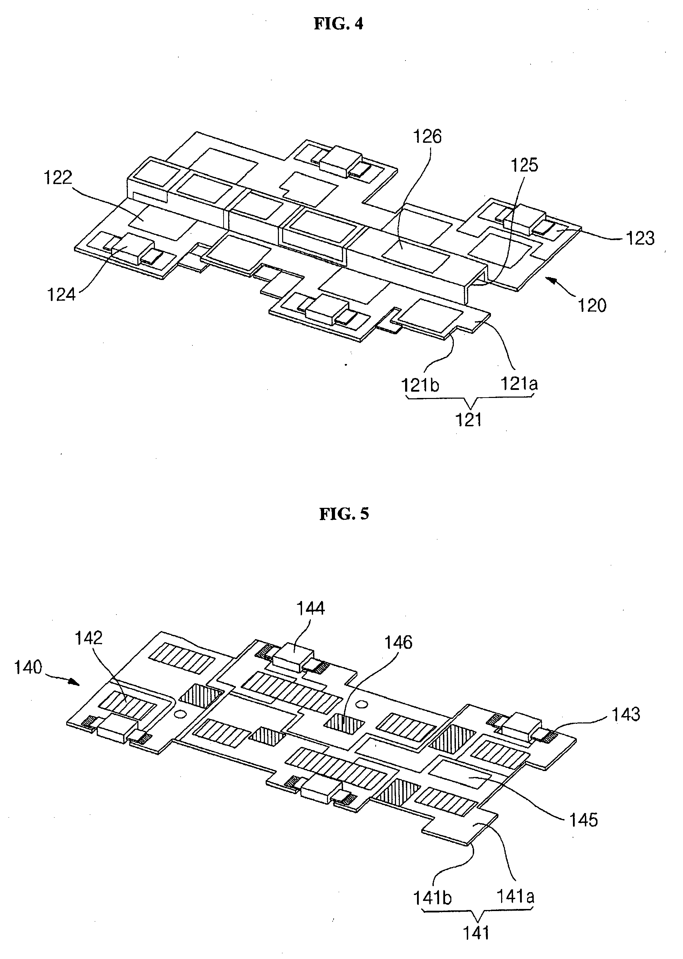

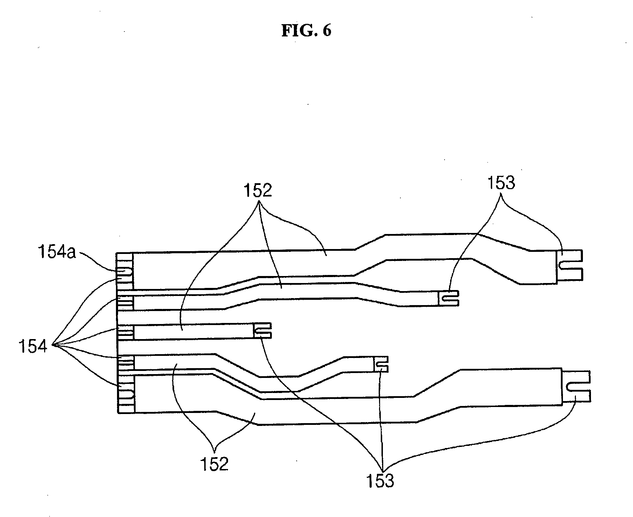

FIG. 1 is an assembled perspective view of a battery pack according to an embodiment of the present invention, FIG. 2 is an exploded perspective view of the battery pack shown in FIG. 1, FIG. 3 is an exploded perspective view of the battery pack shown in FIG. 1, from which a case is removed, FIG. 4 is an enlarged perspective view illustrating a first battery cell and a first flexible board shown in FIG. 3, FIG. 5 is an enlarged perspective view illustrating a second battery cell and a second flexible board shown in FIG. 3, and FIG. 6 is an enlarged perspective view illustrating a third flexible board in the battery pack shown in FIG. 1.

Referring to FIGS. 1 to 6, the battery pack 100 according to the embodiment of the present invention includes a plurality of first battery cells 110, a first flexible board 120, a plurality of second battery cells 130, a second flexible board 140, a third flexible board 150, a circuit module 160, a frame 170, an insulation member 180, and a cover plate 190.

The plurality of first battery cells 110 performs a discharging operation to supply power to an external load and a charging operation to receive power from a charging device. Each of the first battery cells 110 includes an electrode assembly (not shown) including a positive electrode, a negative electrode and a separator interposed between the positive and negative electrodes; a sheath 111 accommodating the electrode assembly and an electrolyte (not shown); and electrode tabs 112 and 113 electrically connected to the electrode assembly and extending to be exposed to the outside of the sheath 111. The sheath 111 may be a pouch case, and the first battery cells 110 accommodated by the pouch case can be easily processed into a desired shape. Thus, the first battery cells 110 may be easily applied to an external electronic device such as an external load.

While the illustrated embodiment of the present invention includes a plurality of 4 first battery cells, it will be appreciated that the number of battery cells may be varied according to the output power level desired. A pair of the first battery cells 110 are coupled to each other in parallel and the corresponding electrode tabs 112 and 113 are disposed in pairs toward a central region located between the pairs of the electrode tabs 112 and 113 facing each other for connection to the first flexible board 120.

The first flexible board 120 is disposed in the central region between the pairs of the electrode tabs 112 and 113 facing each other, to then be connected to the electrode tabs 112 and 113 of each of the plurality of first battery cells 110. The first flexible board 120 is electrically connected to each of the first battery cells 110, and electrically connects the first battery cells 110 to each other.

The first flexible board 120 includes an insulation layer 121, a plurality of first welding terminal portions 122, positive temperature coefficient (PTC) terminal portions 123, PTC elements 124, a protruding surface portion in the form of a ridge 125, and second welding terminal portions 126.

The insulation layer 121 is substantially planar shaped and has a first surface 121 a and a second surface 121b opposite to the first surface 121 a, forming an external appearance of the first flexible board 120. The insulation layer 121 is made of a flexible, insulating material, for example, polyimide. Cell connecting wires (not shown) for electrically connecting the plurality of first battery cells 110 to each other are formed within the insulation layer 121. The cell connecting wires and board connecting wires (not shown) may be made of a conductive material, for example, nickel.

The plurality of first welding terminal portions 122 are formed such that ends of the cell connecting wires are exposed to the outside of the insulation layer 121, for example, to the first surface 121a and the second surface 121b. The plurality of first welding terminal portions 122 are electrically mechanically connected to the electrode tabs 112 and 113 of each of the plurality of first battery cells 110 by welding.

The PTC terminal portions 123 are electrically connected to the cell connecting wires and the board connecting wires and are exposed to the outside of the insulation layer 121, for example, to the first surface 121a. The PTC terminal portions 123 are electrically mechanically connected to the PTC elements 124 by welding.

When an abnormal state, such as a high temperature state, occurs to the plurality of first battery cells 110 due to, for example, overcharge, the PTC elements 124 detect the abnormal state and shut down the circuit. The PTC elements 124 are provided in a one-to-one correspondence with respect to the first battery cells 110, and each of the PTC elements 124 is connected to a respective one of the first battery cells 110. The PTC elements 124 vary resistance values according to the temperature of the first battery cells 110, thereby controlling the current of the first battery cells 110.

The ridge 125 protrudes from substantially the center of the insulation layer 121. The ridge 125 protrudes toward an upper portion of the insulation layer 121 and has a height equal to or greater than a thickness of each of the first battery cells 110. The ridge 125 protrudes high enough to contact the second flexible board 140 coupled to the upper portion of the first flexible board 120. In addition, the first flexible board 120 includes an alignment hole 120a formed at a region of the insulation layer 121. The alignment hole 120a is formed for the purpose of aligning stacking positions at which the first flexible board 120 is to be connected with the second flexible board 140. A separate pin (not shown) is positioned between the alignment hole 120a and the second flexible board 140 to achieve welding between the first flexible board 120 and the second flexible board 140 after alignment of the stacking positions.

The second welding terminal portion 126 is formed on a top surface of the ridge 125. The second welding terminal portion 126 is electrically mechanically connected to the second flexible board 140 coupled to the upper portion of the first flexible board 120 by welding. The second welding terminal portion 126 electrically connects the second flexible board 140 to the electrode tabs 112 and 113 of each of the first battery cells 110 connected to the first flexible board 120. Therefore, the first battery cells 110 may operate with the same electrical signals as those of the second battery cells 130 connected to the second flexible board 140.

The second battery cells 130 are positioned over the first battery cells 110. i.e. the second battery cells 130 are stacked on the first battery cells 110. In addition, the second battery cells 130 are connected to the second flexible board 140 in the same manner as the first battery cells 110 are connected to the first flexible board 120. i.e., the second battery cells 130 are surrounded by a sheath 131, and the electrode terminals 132 and 133 protruding outwardly from the sheath 131 are connected to the second flexible board 140 by, for example, welding. The second battery cells 130 are connected to the circuit module 160 through the second flexible board 140 and the third flexible board 150, thereby allowing electrical signals to be input/output. In addition, as described above, since the first flexible board 120 and the second flexible board 140 are electrically connected, the second battery cells 130 may receive the same electrical signals as those of the first battery cells 110.

The second flexible board 140 has a configuration similar to that of the first flexible board 120. The second flexible board 140 includes an insulation layer 141, a plurality of first welding terminal portions 142, positive temperature coefficient (PTC) terminal portions 143, PTC elements 144, second welding terminal portions 145, and soldering terminal portions 146.

The insulation layer 141 is formed in the same manner as the insulation layer 121 of the first flexible board 120 and is shaped corresponding to the insulation layer 121.

The insulation layer 141 has a first surface 141a and a second surface 141b opposite to the first surface 141 a, forming an external appearance of the second flexible board 140.

The plurality of first welding terminal portions 142 are electrically mechanically connected to the electrode tabs 132 and 133 of each of the plurality of second battery cells 130 by welding.

The PTC terminal portions 143 are exposed to the outside of the insulation layer 141, for example, to the first surface 141a of the insulation layer 141. The PTC elements 144 are the same as the PTC elements 120 of the first flexible board 120 and may be electrically mechanically connected to the PTC terminal portions 143 by, for example, soldering.

The second welding terminal portions 145 are formed on a portion of a top surface of the insulation layer 141. The second welding terminal portions 145 are located in correspondence with the positions of the second welding terminal portions 126 of the first flexible board 120. The second welding terminal portions 145 of the second flexible board 140 and the second welding terminal portions 126 of the first flexible board 120 are connected with each other by welding. As a result, the first flexible board 120 and the second flexible board 140 may be electrically coupled to each other through the second welding terminal portions 145.

In addition, the second flexible board 140 includes an alignment hole 140a formed at a region of the insulation layer 141. The alignment hole 140a is located in correspondence with the alignment hole 120a of the first flexible board 120. Therefore, as described above, after the first flexible board 120 and the second flexible board 140 are connected with each other using a separate pin (not shown), the second welding terminal portions 126 of the first flexible board 120 and the second welding terminal portions 145 of the second flexible board 140 may be welded.

The soldering terminal portions 146 are exposed to the outside of the insulation layer 141, for example, to the first surface 141a, and are electrically mechanically connected to first soldering terminal portions 153 of the third flexible board 150 by soldering. Here, the soldering is usually employed when the first soldering terminal portions 146 of the second flexible board 140 and first soldering terminal portions 153 of the third flexible board 150 are made of different materials.

The third flexible board 150 is disposed over the second flexible board 140 and electrically connects the second flexible board 140 and the circuit module 160. Specifically, the third flexible board 150 includes an insulation layer 151, a plurality of connection wires 152, a plurality of first soldering terminal portions 153 and a plurality of second soldering terminal portions 154.

The insulation layer 151 is substantially planar shaped and has a first surface 151a, a second surface 151 b opposite to the first surface 151a, and a third surface 151c connecting the first surface 151 a and the second surface 151 b, forming an external appearance of the third flexible board 150. The insulation layer 151 includes a plurality of connection wires 152 inside and is formed such that a plurality of first soldering terminal portions 153 and second soldering terminal portions 154 are exposed outwardly. In addition, the insulation layer 151 has an open portion OP formed between each of the plurality of first soldering terminal portions 153. Further, the insulation layer 151 has a bending portion BP formed in the vicinity of the circuit module 160. The bending portion BP forms a level difference. When there is a height difference between the circuit module 160 and the second flexible board 140, the bending portion BP allows the circuit module 160 and the first flexible board 140 to be connected to each other in a stable manner. Here, the insulation layer 151 is made of a flexible, insulating material, for example, polyimide.

The plurality of connection wires 152 are patterns for electrically connecting the second flexible board 140 and the circuit module 160 to each other and are formed within the insulation layer 151. The plurality of connection wires 152 may include wires for detecting power of the second battery cells 130 and wires for detecting voltages of the first battery cells 130. The plurality of connection wires 152 may be made of a conductive material, for example, copper.

The plurality of first soldering terminal portions 153 extend horizontally from one side ends of the plurality of connection wires 152 and are formed to be exposed to the outside of the insulation layer 151, for example, to the outside of the third surface 151 c. The plurality of first soldering terminal portions 153 are disposed corresponding to the soldering terminal portions 146 of the second flexible board 140 and may be electrically mechanically connected by, for example, soldering. The plurality of first soldering terminal portions 153 are integrally formed with the plurality of connection wires 152 and may be made of the same material as the plurality of connection wires 152.

The plurality of second soldering terminal portions 154 extend horizontally from the other side ends of the plurality of connection wires 152 and are formed to be exposed to the outside of the insulation layer 151, for example, to the outside of the third surface 151 c. The plurality of second soldering terminal portions 154 are electrically mechanically connected to a plurality of conductive pads 161 of the circuit module 160 by soldering. The plurality of second soldering terminal portions 154 are substantially rectangular shaped with grooves 154a, and the grooves 154a provide for a space to be filled with lead when soldering the plurality of second soldering terminal portions 154 and the plurality of conductive pads 161, thereby enhancing electrical mechanical coupling forces between the plurality of second soldering terminal portions 154 and the plurality of conductive pads 161.

The circuit module 160 includes the plurality of conductive pads 161 and is electrically mechanically connected to the third flexible board 150 when the plurality of second soldering terminal portions 154 of the third flexible board 150 contact the plurality of conductive pads 161 of the circuit module 160. The circuit module 160 is electrically connected to the plurality of battery cells 110 and 130 through the first flexible board 120, the second flexible board 140 and the third flexible board 150. Although not shown, the circuit module 160 includes on an insulating board a circuit capable of charging and discharging the plurality of battery cells 110 and 130 and a protection circuit for preventing overcharge or overdischarge of the plurality of battery cells 110 and 130. In addition, the circuit module 160 includes a connecting portion 162 for electrical connection to an external electronic device such as an external load or a charging device. The insulating board forming the circuit module 160 may be a rigid board.

The frame 170 is formed to receive the plurality of battery cells 110 and 130, the first flexible board 120, the second flexible board 140, the third flexible board 150, and the circuit module 160, and may include fastening protrusions 171 formed at its external side. The frame 170 is made of an insulating material.

The insulation member 180 includes a first insulation sheet 182 and a second insulation sheet 184 attached to top and bottom of the plurality of battery cells 110 and 130, respectively. The insulation member 160 prevents unnecessary shorts between the plurality of battery cells 110 and 130 and the cover plate 190.

The cover plate 190 is formed to surround the plurality of battery cells 110 and 130, the first flexible board 120, the second flexible board 140, the third flexible board 150, the circuit module 160, the frame 170, and the insulation member 180, forming an external appearance of the battery pack 100. In addition, the cover plate 190 is made of a metallic material and reinforces the strength of sheaths 111 and 131 that are weaker in protecting the plurality of battery cells 110 and 130 against external forces. Specifically, the cover plate 190 includes a first cover plate 192 and a second cover plate 194 disposed on and beneath the plurality of battery cells 110 and 130, respectively. The first cover plate 192 has a first fastening hole 192a, and the second cover plate 194 has a second fastening hole 194a. The first fastening hole 192a and the second fastening hole 194a are engaged with the fastening protrusions 171, thereby connecting the frame 170 with the cover plate 190. In addition, the first cover plate 192 has a first connector exposing groove 192b, and the second cover plate 194 has a second connector exposing groove 194b. The first connector exposing groove 192b and the second connector exposing groove 194b form a connector exposing hole 195 of the cover plate 190. The connecting portion 162 of the circuit module 160 is exposed to the outside of the cover plate 190 through the connector exposing hole 195.

As described above, in the battery pack 100 according to the embodiment of the present invention, the electrode tabs 112 and 113 of the first battery cells 110 are connected to the first flexible board 120, the electrode tabs 132 and 133 of the second battery cells 130 are connected to the second flexible board 140, and the second welding terminal portions 126 formed on the ridge 125 of the first flexible board 120 are welded to the second welding terminal portions 145 of the second flexible board 140, thereby easily connecting the battery cells 110 and 130 to each other when the battery cells 110 and 130 are stacked in multiple layers.

In addition, since the PTC elements 124 and 144 are formed in the first flexible board 120 and the second flexible board 140, they may be formed in the vicinity of the battery cells 110 and 130 and are stably coupled to the PTC elements 124 and 144.

Further, it is not necessary to bend the electrode tabs 112 and 113 of the first battery cells 110 and the electrode tabs 132 and 133 of the second battery cells 130 when combining the first and second battery cells 110 and 130 to each other, thereby preventing the PTC elements 124 and 144 from being separated from the first and second battery cells 110 and 130, respectively.

An exemplary embodiment of a battery pack has been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A battery pack (100) comprising:
at least one first battery cell (110) electrically connected to a first flexible board (120);
at least one second battery cell (130) electrically connected to a second flexible board (140), the second flexible board (140) being electrically connected to the first flexible board (120); and
a circuit module (160) electrically connected to the first flexible board (120) and the second flexible board (140), and including a connection portion for electrically connecting the first and second flexible boards to an external device, **characterized in that**
the first flexible board (120) is provided with a protruding surface portion (125) protruding towards the second flexible board (140) and a connection portion (126) is provided on the protruding surface portion (125) for electrical connecting, in the direction of stacking, to a corresponding connection portion of the second flexible board (120).

2. A battery pack according to claim 1 wherein
the at least one first battery cell (110) is arranged in a first layer;
the at least one second battery cell (130) is arranged in a second layer stacked over the first layer; and
the second flexible board (140) is stacked over the first flexible board (120).

3. A battery pack according to claim 2 wherein the height of the protruding surface portion (125) corresponds to the thickness of the first battery cell (110).

4. A battery pack according to any preceding claim wherein the first flexible board (120) is provided with at least one positive temperature coefficient element (123) for protecting the at least one first battery cell (110); and/or the second flexible board (140) is provided with at least one positive temperature coefficient element (143) for protecting the at least one second battery cell.

5. A battery pack according to claim 4 wherein a positive temperature coefficient element (123; 143) is provided for a respective battery cell in a one to one correspondence.

6. A battery pack according to any preceding claim further comprising a third board (150) electrically connecting the second flexible board (140) to the circuit module (160).

7. A battery pack according to claim 6, wherein the third board (150) is arranged over the second flexible board.

8. A battery pack according to claim 6 or 7, wherein the third board (150) comprises a bending portion to compensate for a level difference between the circuit module (160) and the second flexible board (140).

9. A battery pack according to any preceding claim comprising a plurality of first battery cells (110) electrically connected to one another by the first flexible board (120) and a plurality of second battery cells (130) electrically connected to one another by the second flexible board (140).

10. A battery pack according to any one of claims 6 to 9 further comprising a metallic cover plate (190) for enclosing the at least one first battery cell (110), the at least one second battery cell (130), the first flexible board (120), the second flexible board (140), the third flexible board (150) and the circuit module (160), the metallic cover plate (190) being provided with an aperture (195) through which the connection portion of the circuit module (160) extends.

11. A battery pack according to any one of claims 6 to 10 wherein the third board (150) is flexible

12. A battery pack according to any preceding claim wherein the at least one first battery cell includes electrodes electrically connected to the first flexible board by a weld connection and being absent of a bend and the at least one second battery cell includes electrodes electrically connected to the second flexible board by a weld connection and being absent of a bend.

## Patentansprüche

1. Batteriepack (100), umfassend:
wenigstens eine erste Batteriezelle (110), die elektrisch mit einer ersten flexiblen Platte (120) verbunden ist;
wenigstens eine zweite Batteriezelle (130), die elektrisch mit einer zweiten flexiblen Platte (140) verbunden ist, wobei die zweite flexible Platte (140) elektrisch mit der ersten flexiblen Platte (120) verbunden ist; und
ein Schaltungsmodul (160), das elektrisch mit der ersten flexiblen Platte (120) und der zweiten flexiblen Platte (140) verbunden ist und einen Verbindungsabschnitt zur elektrischen Verbindung der ersten und zweiten flexiblen Platte mit einer externen Vorrichtung umfasst, **dadurch gekennzeichnet, dass**
die erste flexible Platte (120) mit einem überstehenden Oberflächenabschnitt (125) versehen ist, der in Richtung der zweiten flexiblen Platte (140) übersteht, und auf dem überstehenden Oberflächenabschnitt (125) ein Verbindungsabschnitt (126) zur elektrischen Verbindung mit einem entsprechenden Verbindungsabschnitt der zweiten flexiblen Platte (120) in Stapelrichtung vorgesehen ist.

2. Batteriepack nach Anspruch 1, wobei
die wenigstens eine erste Batteriezelle (110) in einer ersten Schicht angeordnet ist;
die wenigstens eine zweite Batteriezelle (130) in einer über die erste Schicht gestapelten zweiten Schicht angeordnet ist; und
die zweite flexible Platte (140) über die erste flexible Platte (120) gestapelt ist.

3. Batteriepack nach Anspruch 2, wobei die Höhe des überstehenden Oberflächenabschnitts (125) der Dicke der ersten Batteriezelle (110) entspricht.

4. Batteriepack nach einem vorangehenden Anspruch, wobei die erste flexible Platte (120) mit wenigstens einem Element mit positivem Temperaturkoeffizienten (123) zum Schutz der wenigstens einen ersten Batteriezelle (110) versehen ist; und/oder die zweite flexible Platte (140) mit wenigstens einem Element mit positivem Temperaturkoeffizienten (143) zum Schutz der wenigstens einen zweiten Batteriezelle versehen ist.

5. Batteriepack nach Anspruch 4, wobei ein Element mit positivem Temperaturkoeffizienten (123; 143) für eine jeweilige Batteriezelle in einer Eins-zu-Eins-Entsprechung vorgesehen ist.

6. Batteriepack nach einem vorangehenden Anspruch, weiterhin umfassend eine dritte Platte (150), welche die zweite flexible Platte (140) elektrisch mit dem Schaltungsmodul (160) verbindet.

7. Batteriepack nach Anspruch 6, wobei die dritte Platte (150) über der zweiten flexiblen Platte angeordnet ist.

8. Batteriepack nach Anspruch 6 oder 7, wobei die dritte Platte (150) einen Biegeabschnitt umfasst, um einen Höhenunterschied zwischen dem Schaltungsmodul (160) und der zweiten flexiblen Platte (140) auszugleichen.

9. Batteriepack nach einem vorangehenden Anspruch, umfassend eine Mehrzahl erster Batteriezellen (110), die durch die erste flexible Platte (120) elektrisch miteinander verbunden sind, und eine Mehrzahl zweiter Batteriezellen (130), die durch die zweite flexible Platte (140) elektrisch miteinander verbunden sind.

10. Batteriepack nach einem der Ansprüche 6 bis 9, weiterhin umfassend eine metallische Abdeckplatte (190) zur Umschließung der wenigstens einen ersten Batteriezelle (110), der wenigstens einen zweiten Batteriezelle (130), der ersten flexiblen Platte (120), der zweiten flexiblen Platte (140), der dritten flexiblen Platte (150) und des Schaltungsmoduls (160), wobei die metallische Abdeckplatte (190) mit einer Öffnung (195) versehen ist, durch die sich der Verbindungsabschnitt des Schaltungsmoduls (160) erstreckt.

11. Batteriepack nach einem der Ansprüche 6 bis 10, wobei die dritte Platte (150) flexibel ist.

12. Batteriepack nach einem vorangehenden Anspruch, wobei die wenigstens eine erste Batteriezelle Elektroden umfasst, die über eine Schweißverbindung elektrisch mit der ersten flexiblen Platte verbunden sind und keine Biegung aufweisen, und die wenigstens eine zweite Batteriezelle Elektroden aufweist, die über eine Schweißverbindung elektrisch mit der zweiten flexiblen Platte verbunden sind und keine Biegung aufweisen.

## Revendications

1. Batterie d'alimentation (100) comprenant :
au moins un premier élément de batterie (110) connecté électriquement à un premier circuit souple (120) ;
au moins un deuxième élément de batterie (130) connecté électriquement à un deuxième circuit souple (140), le deuxième circuit souple (140) étant connecté électriquement au premier circuit souple (120) ; et
un module de circuit (160) connecté électriquement au premier circuit souple (120) et au deuxième circuit souple (140), et comprenant une partie de connexion pour connecter électriquement les premier et deuxième circuits souples à un dispositif externe, **caractérisé en ce que**
le premier circuit souple (120) est pourvu d'une partie de surface saillante (125) faisant saillie vers le deuxième circuit souple (140) et une partie de connexion (126) est prévue sur la partie de surface saillante (125) pour une connexion électrique, dans la direction d'empilage, à une partie de connexion correspondante du deuxième circuit souple (120).

2. Batterie d'alimentation selon la revendication 1, dans lequel
ledit au moins un premier élément de batterie (110) est agencé dans une première couche ;
ledit au moins un deuxième élément de batterie (130) est agencé dans une deuxième couche empilée sur la première couche ; et
le deuxième circuit souple (140) est empilée sur le premier circuit souple (120).

3. Batterie d'alimentation selon la revendication 2, dans lequel la hauteur de la partie de surface saillante (125) correspond à l'épaisseur du premier élément de batterie (110).

4. Batterie d'alimentation selon l'une quelconque des revendications précédentes, dans lequel le premier circuit souple (120) est pourvu d'au moins un élément à coefficient de température positif (123) pour protéger ledit au moins un premier élément de batterie (110) ; et/ou le deuxième circuit souple (140) est pourvu d'au moins un élément à coefficient de température positif (143) pour protéger ledit au moins un deuxième élément de batterie.

5. Batterie d'alimentation selon la revendication 4, dans lequel un élément à coefficient de température positif (123 ; 143) est prévu pour un élément de batterie respectif dans une correspondance biunivoque.

6. Batterie d'alimentation selon l'une quelconque des revendications précédentes, comprenant en outre un troisième circuit (150) connectant électriquement le deuxième circuit souple (140) au module de circuit (160).

7. Batterie d'alimentation selon la revendication 6, dans lequel le troisième circuit (150) est agencé sur le deuxième circuit souple.

8. Batterie d'alimentation selon la revendication 6 ou 7, dans lequel le troisième circuit (150) comprend une partie pliée pour compenser une différence de niveau entre le module de circuit (160) et le deuxième circuit souple (140).

9. Batterie d'alimentation selon l'une quelconque des revendications précédentes comprenant une pluralité de premiers éléments de batterie (110) connectés électriquement les uns aux autres par le premier circuit souple (120) et une pluralité de deuxièmes éléments de batterie (130) connectés électriquement les uns aux autres par le deuxième circuit souple (140).

10. Batterie d'alimentation selon l'une quelconque des revendications 6 à 9, comprenant en outre une plaque de recouvrement métallique (190) pour enfermer ledit au moins un premier élément de batterie (110), ledit au moins un deuxième élément de batterie (130), le premier circuit souple (120), le deuxième circuit souple (140), le troisième circuit souple (150) et le module de circuit (160), la plaque de recouvrement métallique (190) étant pourvue d'une ouverture (195) à travers laquelle la partie de connexion du module de circuit (160) s'étend.

11. Batterie d'alimentation selon l'une quelconque des revendications 6 à 10, dans lequel le troisième circuit (150) est souple.

12. Batterie d'alimentation selon l'une quelconque des revendications précédentes, dans lequel ledit au moins un premier élément de batterie comprend des électrodes connectées électriquement au premier circuit souple par une connexion par soudure et ne comportant pas de partie pliée et ladite au moins un deuxième élément de batterie comprend des électrodes connectées électriquement au deuxième circuit souple par une connexion par soudure et ne comportant pas de partie pliée.
